# EUROPÄISCHE PATENTANMELDUNG

(11) **EP 2 468 697 A1**
(43) Veröffentlichungstag der Anmeldung: **27.06.2012**
(21) Anmeldenummer: 10196969.9
(22) Anmeldetag: 24.12.2010
(51) Int. Cl.: C04B 28/10, C04B 28/30, C04B 28/32

(54) **Magnesiumestrich**

(71) Anmelder: Sika Technology AG, 6340 Baar (CH)
(72) Erfinder: Honert, Dieter, 69234 Dielheim (DE); Blask, Oliver, 68723 Oftersheim (DE)
(74) Vertreter: Sika Patent Attorneys

(57) **Zusammenfassung**

Die vorliegende Erfindung betrifft Magnesiumzemente enthaltend eine Magnesiumverbindung ausgewählt aus Magnesiumoxid, Magnesiumcarbonat und Magnesiumhydroxid sowie ein Magnesiumsalz, ein Kammpolymer und Quarzsand. Die erfindungsgemässe Zusammensetzung zeichnet sich durch eine vorteilhafte Verarbeitbarkeit aus sowie durch einen geringen Wassergehalt.

## Beschreibung

### Technisches Gebiet

Die Erfindung betrifft Magnesiumzemente, die Kammpolymere enthalten. Die Erfindung betrifft auch die Herstellung solcher Zemente und ihre Verwendung sowie Formkörper, die aus den Zementen hergestellt werden.

### Stand der Technik

Magnesiumzemente enthalten Magnesiumverbindungen, die als Bindemittel wirken. Magnesiumzemente werden in der Bauchemie für eine Vielzahl von Anwendungen eingesetzt. Ein besonderes Anwendungsgebiet ist die Herstellung von Bodenbelägen, insbesondere Estriche.

Magnesiumzemente enthalten üblicherweise Magnesiumoxid, Magnesiumcarbonat und/oder Magnesiumhydroxid in Verbindung mit einem Magnesiumsalz und Quarzsand. Nach Zugabe von Wasser, Formgebung und Abbinden entstehen harte Bodenbeläge. Da Magnesiumzemente mit Wasser abgebunden werden, besteht ein Bedürfnis, den Wassergehalt zu verringern, sodass das Produkt stabiler wird. Bei geringem Wassergehalt ist auch ein kürzerer Härtungs- oder Trocknungsvorgang ausreichend. Dennoch sollen mit Wasser abgebundene Magnesiumzemente vor der Härtung gut verarbeitbar sein.

### Darstellung der Erfindung

Der Erfindung liegt das Problem zugrunde, ein vereinfachtes und verbessertes Verfahren zur Herstellung von Magnesiumzementen zur Verfügung zu stellen. Erfindungsgemäß sollen auch verbesserte Magnesiumzemente sowie daraus herstellbare Produkte zur Verfügung gestellt werden.

Insbesondere liegt der Erfindung das Problem zugrunde, den Wasserbedarf von Magnesiumzementen zu reduzieren und ein ausreichendes Fliessverhalten nach der Zugabe von Wasser zu erreichen. Dabei sollen die Verarbeitungseigenschaften und die Produkteigenschaften der ausgehärteten Formkörper nur wenig nachteilig verändert werden. Die Bauteile sollen eine hohe Dichte und eine gute Festigkeit, insbesondere hinsichtlich der Zugfestigkeit und Bruchfestigkeit, aufweisen. Bevorzugt soll das Verfahren eine zügige Verarbeitung von Magnesiumzementen ermöglichen. Das Verfahren soll insbesondere für die Herstellung von Bodenbelägen, insbesondere Magnesiumestrichen, geeignet sein. Die dafür verwendeten Additive und Zusammensetzungen sollen einfach und kostengünstig verfügbar sein und zu einer effizienten Verflüssigung führen.

Das der Erfindung zugrunde liegende Problem wird überraschenderweise gelöst durch Magnesiumzemente, Verfahren, Bindemittelsuspensionen, Formkörper und Verwendungen gemäß den Patentansprüchen.

### Wege zur Ausführung der Erfindung

Gegenstand der Erfindung ist ein Magnesiumzement, enthaltend
(a) Magnesiumverbindung **MV**, ausgewählt aus der Gruppe bestehend aus Magnesiumoxid, Magnesiumcarbonat und Magnesiumhydroxid;
(b) mindestens ein Magnesiumsalz, ausgewählt aus der Gruppe bestehend aus Magnesiumsulfat, -chlorid, -nitrat, -jodid und -bromid;
(c) mindestens ein Kammpolymer, das ein lineares Polymergerüst und daran gebundene Seitenketten aufweist, wobei das lineare Polymergerüst Carbonsäuregruppen und/oder Carboxylatgruppen aufweist; und
(d) Quarzsand.

Unter dem Begriff "Magnesiumzement" wird erfindungsgemäß eine aushärtbare Zusammensetzung verstanden, die Magnesia, ausgewählt aus der Gruppe bestehend aus Magnesiumoxid, Magnesiumcarbonat und Magnesiumhydroxid enthält, das in Verbindung mit Wasser als Bindemittel wirkt. Die Bindungseigenschaften von Magnesiumzementen beruhen im Allgemeinen darauf, dass sich aus Magnesia und einem Magnesiumsalz nach Zugabe von Wasser gemischte Oxidverbindungen bilden.

Unter dem Begriff "Quarzsand" wird erfindungsgemäß Quarzsand sowie Quarzsand zu feinem Mehl vermahlen oder auch Glasmikrokugeln verstanden. Vorzugsweise handelt es sich bei dem Begriff "Quarzsand" um Quarzsand sowie Quarzsand zu feinem Mehl vermahlen. Typischerweise haben erwähnte Stoffe eine Teilchengrösse von im Wesentlichen 0.01 - 16 mm, bevorzugt 0.1 - 8 mm, insbesondere bevorzugt 0.1 - 4 mm.

Vorzugsweise beträgt der Anteil an Quarzsand 40-60 Gew.-%, bezogen auf das Gesamtgewicht des Magnesiumzements.

Bei der Magnesiumverbindung **MV**, ausgewählt aus der Gruppe bestehend aus Magnesiumoxid, Magnesiumcarbonat und Magnesiumhydroxid handelt es sich bevorzugt um Magnesiumoxid (Magnesia), insbesondere bevorzugt um kaustisch gebranntes Magnesia. Letzteres entsteht beim Calcinieren von Magnesiumcarbonat (Magnesit) bei Temperaturen von etwa 800°C. Kaustisch gebranntes Magnesia reagiert in Wasser mit Magnesiumsalzen unter Bildung von gemischten Oxiden, die eine hohe Festigkeit aufweisen.

Der Magnesiumzement enthält mindestens ein Magnesiumsalz, ausgewählt aus der Gruppe bestehend aus Magnesiumsulfat, -chlorid, -nitrat, -jodid und - bromid. Vorzugsweise ist das Magnesiumsalz ausgewählt aus der Gruppe bestehend aus Magnesiumsulfat und -chlorid, insbesondere bevorzugt ist Magnesiumchlorid.

Der Anteil an der Magnesiumverbindung **MV** beträgt typischerweise 30 - 65 Gew.-%, insbesondere 40-60 Gew.-%, bezogen auf das Gesamtgewicht des Magnesiumzement.

Das Verhältnis der Gewichtsanteile am Gesamtgewicht des Magnesiumzement von Magnesiumsalz : Magnesiumverbindung **MV** beträgt typischerweise 0.1:1 - 0.35:1, insbesondere 0.125:1 - 0.185:1.

Der Anteil an Magnesiumsalz beträgt vorzugsweise 2-20 Gew.-%, insbesondere 5-12 Gew.-%, bezogen auf das Gesamtgewicht des Magnesiumzement.

Besonders bevorzugt handelt es sich bei der Magnesiumverbindung **MV** um Magnesiumoxid und bei dem Magnesiumsalz um Magnesiumchlorid. In einer weiteren bevorzugten Ausführungsform handelt es sich bei der Magnesiumverbindung **MV** um Magnesiumoxid und bei dem Magnesiumsalz um Magnesiumsulfat.

Erfindungsgemäß wird ein Kammpolymer eingesetzt, das ein lineares Polymergerüst und daran gebundene Seitenketten aufweist, wobei das lineare Polymergerüst Carbonsäuregruppen und/oder Carboxylatgruppen aufweist. Als "Kammpolymere" werden Polymere bezeichnet, deren Aufbau angesichts der Anordnung einer Vielzahl von Seitenketten an ein einziges lineares Polymergerüst (Backbone) einem Kamm ähnelt.
Vorzugsweise handelt es sich bei dem Kammpolymer um ein Kammpolymer, welches in Wasser löslich ist.

Der Anteil an dem mindestens einen Kammpolymer beträgt bevorzugt 0.05 - 5 Gew.-%, insbesondere 0.1 - 1 Gew.-%, insbesondere bevorzugt 0.2 - 0.6 Gew.-%, bezogen auf das Gesamtgewicht des Magnesiumzement.

Nach dem Stand der Technik bekannte Kammpolymere enthalten üblicherweise Seitenketten, die einen Polyetherbestandteil aufweisen, insbesondere einen Polyethylen- oder Polypropylenbestandteil. Die Seitenketten sind bevorzugt über Ester-, Amid- und/oder Ethergruppen an die Hauptkette angebunden. Es können jedoch neben den über Ester-, Amid- oder Ethergruppen gebundenen Seitenketten weitere Seitenketten enthalten sein. Kammpolymere weisen häufig eine Kombination verschiedener Seitenketten auf, die sich beispielsweise hinsichtlich funktioneller Gruppen, Länge oder Anteil an den gesamten Seitenketten unterscheiden.

Solche Kammpolymere sind im Stand der Technik bekannt. Sie werden als Verflüssiger beispielsweise für Gipszusammensetzungen eingesetzt. Die Kammpolymere weisen üblicherweise in der Hauptkette freie Carbonsäuregruppen und/oder Carboxylatgruppen auf. Es wird angenommen, dass Kammpolymere in Gipszusammensetzungen über die Hauptkette an die anorganischen Gipspartikel haften, so dass die Seitenketten von den anorganischen Partikeln weg weisen und durch gegenseitige Abstoßung den Verflüssigungseffekt bewirken.

Grundsätzlich sind die beschriebenen Kammpolymere geeignet, um die Verarbeitbarkeit von Magnesiumzementen zu verbessern. Es wurde jedoch festgestellt, dass Kammpolymere mit einem vergleichsweise hohen Anteil an Carbonsäuregruppen und/oder Carboxylatgruppen zur Verbesserung der Verarbeitbarkeit von Magnesiumzementen besonders geeignet sind. Die vorteilhaften Eigenschaften der Kammpolymeren entfalten sich wahrscheinlich in Folge der Adsorption an Zementpartikel. Ohne an eine Theorie gebunden zu sein, wird vermutet, dass die Kammpolymere besser an die Oberfläche von Zementpartikeln binden können, wenn sie eine relativ hohe Ladungsdichte in der Polymerhauptkette aufweisen. Wahrscheinlich konkurrieren die Kammpolymere bei der Adsorption mit den Anionen von Magnesiumsalzen, insbesondere mit doppelt negativ geladenen Sulfationen, und können diese bei hoher Ladungsdichte in der Polymerhauptkette eher verdrängen.

In bevorzugten Ausführungsformen weist das lineare Polymergerüst daher mindestens 20%, mindestens 50% oder mindestens 70% Carboxygruppen auf, bezogen auf die Gesamtzahl der monomeren Untereinheiten des linearen Polymergerüsts. Unter dem Begriff "Carboxygruppen" werden im vorliegenden Dokument Carbonsäuregruppen, deren Salze (Carboxylatgruppen) und deren Ester verstanden. In bevorzugten Ausführungsformen liegt der Anteil an Carboxygruppen zwischen 20 und 95%, insbesondere zwischen 50 und 95% oder zwischen 60 und 90%. Bevorzugt liegt das Säure-/Esterverhältnis (S/E) des linearen Polymergerüsts, also das Verhältnis der nicht veresterten Carboxygruppen zu den veresterten Carboxygruppen, zwischen 1 und 15, bevorzugt zwischen 2 und 10 oder zwischen 3 und 8. Wenn das lineare Polymergerüst eine Polymethacrylsäure ist, ist ein S/E-Verhältnis zwischen 1 und 6, insbesondere zwischen 2 und 5 besonders bevorzugt. Sofern das lineare Polymergerüst eine Polyacrylsäure ist, ist ein S/E-Verhältnis zwischen 3 und 10, insbesondere zwischen 4 und 8 besonders bevorzugt.

Erfindungsgemäß geeignete Kammpolymere sind einerseits solche, die über Ethergruppen an das lineare Polymergerüst gebundene Seitenketten aufweisen. Über Ethergruppen an das lineare Polymergerüst gebundene Seitenketten können durch Polymerisation von Vinylethern oder Allylethern eingeführt werden.

Derartige Kammpolymere sind beispielsweise in WO 2006/133933 A2 beschrieben, deren Inhalt hiermit insbesondere durch Bezugnahme eingeschlossen wird. Die Vinylether oder Allylether weisen insbesondere die Formel (II) auf.

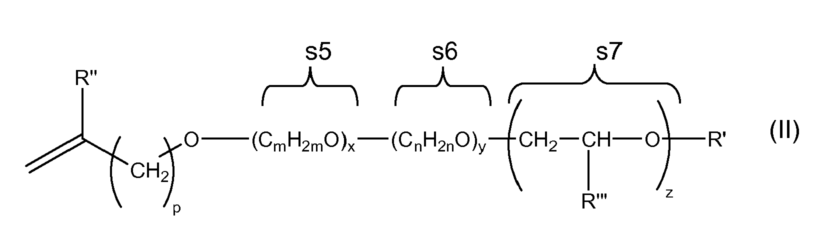

Hierbei steht R' für H oder für einen aliphatischen Kohlenwasserstoffrest mit 1 bis 20 C-Atomen oder einen cycloaliphatischen Kohlenwasserstoffrest mit 5 bis 8 C-Atomen oder einen, gegebenenfalls substituierten, Arylrest mit 6 bis 14 C-Atomen. R" steht für H oder für eine Methylgruppe, R"' steht für einen unsubstituierten oder substituierten Arylrest, insbesondere für einen Phenylrest.

Weiterhin stehen p für 0 oder 1; m und n unabhängig voneinander je für 2, 3 oder 4; und x und y und z unabhängig voneinander je für Werte aus dem Bereich von 0 bis 350.

Die Abfolge der in Formel (II) als s5, s6 und s7 bezeichneten Teilstrukturelemente kann hierbei alternierend, blockartig oder zufällig sein.

Insbesondere sind derartige Kammpolymere Copolymerisate von Vinylether oder Allylether mit Maleinsäureanhydrid, Maleinsäure, (Meth)acrylamid und/oder (Meth)acrylsäure.

Als Kammpolymer **KP** sind andererseits Kammpolymere geeignet, die über Estergruppen an das lineare Polymergerüst gebundene Seitenketten aufweisen. Gegebenenfalls sind zusätzlich über Amidgruppen gebundene Seitenketten enthalten. Diese Art von Kammpolymeren **KP** ist gegenüber den Kammpolymeren mit über Ethergruppen an das lineare Polymergerüst gebundenen Seitenketten bevorzugt. Besonders bevorzugte Kammpolymere **KP** sind Copolymere der Formel (I):

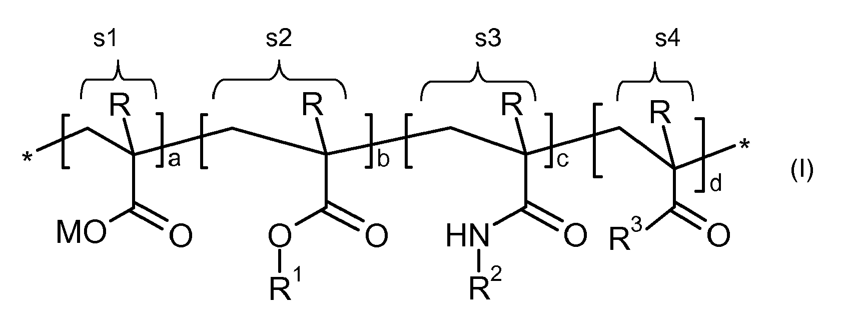

Hierbei steht M unabhängig voneinander für H⁺, Alkalimetallion, Erdalkalimetallion, zwei- oder dreiwertiges Metallion, Ammoniumion, oder organische Ammoniumgruppe. Der Begriff "unabhängig voneinander" bedeutet im vorliegenden Dokument jeweils, dass ein Substituent unterschiedliche zur Verfügung stehenden Bedeutungen in demselben Molekül aufweisen kann. So kann beispielsweise das Copolymer der Formel (I) gleichzeitig Carbonsäuregruppen und Natriumcarboxylatgruppen aufweisen, das heisst, dass M in diesem Falle unabhängig voneinander für H⁺ und Na⁺ steht. Dem Fachmann ist klar, dass es sich einerseits um ein Carboxylat handelt, an welches das Ion M gebunden ist, und dass andererseits bei mehrwertigen Ionen M die Ladung durch Gegenionen ausgeglichen sein muss.

Weiterhin stehen die Substituenten R unabhängig voneinander für Wasserstoff oder für eine Methylgruppe. Des Weiteren stehen die Substituenten R¹ unabhängig voneinander für -[AO]_{q}-R⁴. Die Substituenten R² stehen unabhängig voneinander für eine C₁- bis C₂₀-Alkylgruppe, -Cycloalkylgruppe, - Alkylarylgruppe oder für -[AO]_{q}-R⁴. Der Substituent A steht in beiden Fälle unabhängig voneinander für eine C₂-bis C₄-Alkylengruppe und R⁴ für eine C₁-bis C₂₀-Alkylgruppe, -Cyclohexylgruppe oder-Alkylarylgruppe, während q einen Wert von 2 bis 250, insbesondere von 8 bis 200, besonders bevorzugt von 11 bis 150, darstellt.

Des Weiteren stehen die Substituenten R³ unabhängig voneinander für - NR⁵R⁶, -OR⁷NR⁸R⁹. Hierbei stehen R⁵ und R⁶ unabhängig voneinander für H oder eine C₁-bis C₂₀-Alkylgruppe, -Cycloalkylgruppe oder-Alkylarylgruppe oder -Arylgruppe oder für eine Hydroxyalkylgruppe oder für eine Acetoxyethyl-(CH₃-CO-O-CH₂-CH₂-) oder eine Hydroxy-isopropyl- (HO-CH(CH₃)-CH₂-) oder eine Acetoxyisopropylgruppe (CH₃-CO-O-CH(CH₃)-CH₂-), oder R⁵ und R⁶ bilden zusammen einen Ring, von dem der Stickstoff ein Teil ist, um einen Morpholin- oder Imidazolinring aufzubauen. R⁷ steht unabhängig von einander für einen unsubstituierten oder substituierten Alkylrest mit 1 bis 10 C-Atomen. Weiterhin stehen die Substituenten R⁸ und R⁹ je unabhängig voneinander für eine C₁-bis C₂₀-Alkylgruppe, -Cycloalkylgruppe, -Alkylarygruppe, -Ary-Igruppe oder für eine Hydroxyalkylgruppe.

Die Abfolge der in Formel (I) als s1, s2, s3 und s4 bezeichneten Teilstrukturelemente kann hierbei alternierend, blockartig oder zufällig angeordnet sein.

Schliesslich stellen die Indizes a, b, c und d Molverhältnisse der Struktureinheiten s1, s2, s3 und s4 dar. Diese Strukturelemente stehen in einem Verhältnis von
a/b/c/d = (0.1 - 0.9) / (0.1 - 0.9) / (0 - 0.8) / (0 - 0.3),
insbesondere a/b/c/d = (0.1 - 0.9) / (0.1 - 0.9) / (0 - 0.5) / (0 - 0.1),
bevorzugt a/b/c/d = (0.1 - 0.9) / (0.1 - 0.9) / (0 - 0.3) / (0 - 0.06),
zueinander, mit der Massgabe, dass a + b + c + d = 1 ist. Die Summe c + d ist bevorzugt grösser als 0. In weiteren bevorzugten Ausführungsformen ist a = 0.1 bis 0.9 und b + c + d = 0.9 bis 0.1, insbesondere a = 0.2 bis 0.8 und b + c + d = 0.8 bis 0.2. Bevorzugt ist a > 0.2 oder >0.3.

Die Herstellung des Kammpolymeren KP der Formel (I) erfolgt insbesondere nach den Methoden der radikalischen Polymerisation oder polymeranalogen Umsetzung. Die Herstellung kann einerseits durch radikalische Polymerisation der entsprechenden Monomere der Formel (IIIₐ), (III_{b}), (III_{c}) bzw. (III_{d}), welche dann zu den Strukturelementen Struktureinheiten s1, s2, s3 und s4 führen, 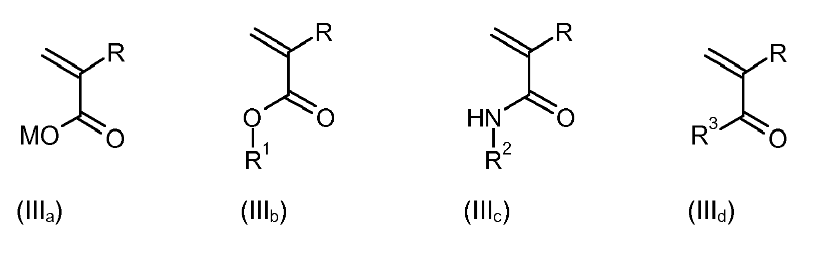 oder andererseits durch eine sogenannte polymeranaloge Umsetzung einer Polycarbonsäure der Formel (IV) erfolgen 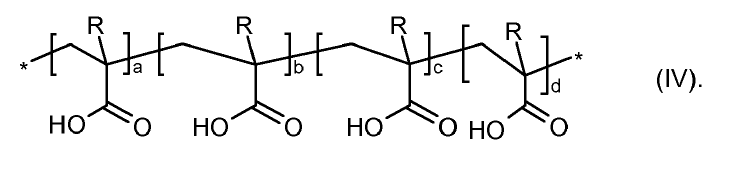 In der polymer-analogen Umsetzung wird die Polycarbonsäure der Formel (IV) mit den korrespondierenden Alkoholen, Aminen verestert oder amidiert und dann allenfalls neutralisiert oder teilneutralisiert (je nach Art des Rest M z.B. mit Metallhydroxiden oder Ammoniak). Details zur polymer-analogen Umsetzung sind beispielsweise offenbart in EP 1 138 697 B1 auf Seite 7 Zeile 20 bis Seite 8 Zeile 50, sowie in dessen Beispielen, oder in EP 1 061 089 B1 auf Seite 4, Zeile 54 bis Seite 5 Zeile 38 sowie in dessen Beispielen. In einer Abart davon, wie sie in EP 1 348 729 A1 auf Seite 3 bis Seite 5 sowie in dessen Beispielen beschrieben sind, kann das Kammpolymer **KP** der Formel (I) im festem Aggregatszustand hergestellt werden. Die Offenbarung dieser gerade genannten Patentschriften wird hiermit insbesondere durch Bezugnahme eingeschlossen.

Es hat sich erwiesen, dass besonders bevorzugte Ausführungsformen der Kammpolymere **KP** der Formel (I) diejenigen sind, bei welchen c+d > 0, insbesondere d > 0, sind. Als Rest R³ hat sich insbesondere -NH-CH₂-CH₂-OH als besonderes vorteilhaft erwiesen.

Als besonders vorteilhaft erwiesen haben sich Kammpolymere **KP**, wie sie von Sika Schweiz AG unter der Handelsnamenreihe ViscoCrete® kommerziell vertrieben werden, erwiesen.

Der erfindungsgemäße Magnesiumzement kann mit relativ wenig Wasser abgebunden werden. Der Zement zeigt in der mit Wasser abgebundenen Form insbesondere eine verbesserte Verarbeitbarkeit gegenüber Zusammensetzungen, die kein Kammpolymer enthalten.

Der Magnesiumzement kann weiter Flugaschen, Silica fume, Schlacke, Hüttensande und/oder Kalk, insbesondere Kalksteinfüllmittel und gebrannter Kalk, enthalten. Typischerweise beträgt der Anteil solcher Stoffe 5-20 Gew.-%, bezogen auf das Gesamtgewicht des Magnesiumzement.

Der erfindungsgemäße Magnesiumzement kann im festen Aggregatszustand als Trockenmischung vorliegen. Eine solche Zusammensetzung ist über längere Zeit lagerfähig und wird typischerweise in Säcken abgepackt oder in Silos gelagert. Sie ist auch nach längerer Lagerungszeit einsetzbar und weist eine gute Rieselfähigkeit auf.

In bevorzugten Ausführungsformen enthält der erfindungsgemäße Magnesiumzement zusätzlich Konservierungsmittel, Entschäumer, Flammschutzmittel, Hydrophobierungsmittel, Farbstoffe, Beschleuniger, Verzögerer, Schwindreduzierer, Schaumbildner, Stabilisatoren gegen Hitze und Licht und/oder Mittel zur pH-Wert Einstellung. Besonders bevorzugt ist der Einsatz von Konservierungsmitteln und Entschäumern. Grundsätzlich können dem Magnesiumzement übliche Zusatzstoffe beigemischt werden, die nach dem Stand der Technik bekannt sind.

In einer bevorzugten Ausführungsform handelt es sich bei dem Magnesiumzement um einen Magnesiumzement, dessen Komponenten (a), (b), (c) und (d) zusammen mehr als 80 Gew.-%, vorzugsweise mehr als 90 Gew.-%, insbesondere mehr als 95 Gew.-%, bezogen auf das Gesamtgewicht des Magnesiumzement, betragen.

In einer besonders bevorzugten Ausführungsform handelt es sich bei dem Magnesiumzement um einen Magnesiumzement enthaltend:
(a) Magnesiumverbindung **MV**, ausgewählt aus der Gruppe bestehend aus Magnesiumoxid, Magnesiumcarbonat, wobei der Anteil an Magnesiumverbindung **MV** 30-65 Gew.-%, insbesondere 40-60 Gew.-%, bezogen auf das Gesamtgewicht des Magnesiumzement, beträgt;
(b) mindestens ein Magnesiumsalz, ausgewählt aus der Gruppe bestehend aus Magnesiumsulfat und -chlorid, wobei der Anteil an Magnesiumsalz 2-20 Gew.-%, insbesondere 5-12 Gew.-%, bezogen auf das Gesamtgewicht des Magnesiumzement, beträgt;
(c) mindestens ein Kammpolymer, das ein lineares Polymergerüst und daran gebundene Seitenketten aufweist, wobei das lineare Polymergerüst Carbonsäuregruppen und/oder Carboxylatgruppen aufweist und das Kammpolymer ein Kammpolymer der Formel (I) oder der Formel (II), insbesondere der Formel (I), ist, wobei der Anteil an Kammpolymer 0.05 - 5 Gew.-%, bevorzugt 0.1 - 1 Gew.-%, bezogen auf das Gesamtgewicht des Magnesiumzement, beträgt; und
(d) Quarzsand, wobei der Anteil an Quarzsand 40-60 Gew.-%, bezogen auf das Gesamtgewicht des Magnesiumzement, beträgt.

Gegenstand der Erfindung ist auch eine Bindemittelsuspension, enthaltend
60 - 85 Gew.-%, vorzugsweise 70 - 80 Gew.-% eines Magnesiumzements wie er vorgehend beschrieben ist, sowie
15-40 Gew.-%, vorzugsweise 20 - 30 Gew.-% Wasser,
bezogen auf das Gesamtgewicht der Bindemittelsuspension.

Wie vorgehend erwähnt kann der erfindungsgemäße Magnesiumzement mit relativ wenig Wasser abgebunden werden. Die erfindungsgemässe Bindemittelsuspension zeigt insbesondere eine verbesserte Verarbeitbarkeit gegenüber Zusammensetzungen, die kein Kammpolymer enthalten (bei gleichem Wasser/Zement Wert (w/z-Wert)). Die Verarbeitbarkeit ist beispielsweise über das Ausbreitmass in Anlehnung an EN 1015-3 bestimmbar oder nach dem im Beispielteil beschriebenen Verfahren zur Bestimmung des Ausbreitmasses.

Erfindungsgemäß ist es bevorzugt, dass die Bindemittelsuspension 20 -30 Gew.-% Wasser aufweist.

Eine Bindemittelsuspension, welche weniger als 15 Gew.-% Wasser aufweist, kann dahingehend nachteilig sein, dass für eine zufriedenstellende Verarbeitbarkeit der Anteil an Kammpolymer überproportional erhöht werden muss, was aufgrund ökonomischer Überlegungen nachteilig sein kann. Weiter ist eine Bindemittelsuspension vorteilhaft, deren Erstarrungsbeginn zwischen 15-90 min, vorzugsweise zwischen 30 - 60 min, nach Herstellung liegt.

Ein weiterer Gegenstand der Erfindung ist ein Verfahren zur Herstellung eines Formkörpers, umfassend die Schritte
(A) Vermischen eines Magnesiumzements, wie er vorgehend beschrieben ist, mit Wasser;
(B) Formen zu einem Formköper; und
(C) Aushärten des Formkörpers.

In Schritt (A) können die Komponenten des Magnesiumzements mit Wasser grundsätzlich in beliebiger Reihenfolge vermischt werden. In einer bevorzugten Ausführungsformen wird zunächst eine Suspension der Komponenten (b) und (c) mit Wasser hergestellt und danach die restlichen Komponenten der wässrigen Suspension zugegeben.

Ein weiterer Gegenstand der Erfindung ist ein Formkörper, erhältlich durch Aushärten eines erfindungsgemäßen Magnesiumzements, durch Aushärten einer erfindungsgemässen Bindemittelsuspension oder durch ein erfindungsgemäßes Verfahren zur Herstellung eines Formkörpers. Erfindungsgemäß wird mit "Formkörper" ein ausgehärteter Gegenstand bezeichnet, der eine dreidimensionale Ausdehnung aufweist. Das Aushärten des Formkörpers erfolgt durch Trocknen und/oder Erwärmen. In einer bevorzugten Ausführungsform der Erfindung ist der Formkörper ein Bodenbelag, insbesondere ein Estrich.

Bevorzugt werden erwähnte Bodenbeläge aus Magnesiumzementen hergestellt, die als Magnesiumverbindungen **MV** Magnesiumoxid und als Magnesiumsalz Magnesiumchlorid aufweisen.

Gegenstand der Erfindung ist auch die Verwendung eines Kammpolymers, das ein lineares Polymergerüst und daran gebundene Seitenketten aufweist, wobei das lineare Polymergerüst Carbonsäuregruppen und Carboxylatgruppen aufweist, zur Verbesserung der Verarbeitbarkeit, insbesondere zur Verflüssigung, oder zur Verbesserung der Stabilität von Magnesiumzementen.

Überraschenderweise löst der erfindungsgemäße Magnesiumzement die erfindungsgemäße Aufgabe. Durch den Zusatz der Kammpolymere zu Magnesiumzementen kann überraschenderweise der Wasseranteil signifikant gesenkt werden. Gleichzeitig werden die Produkteigenschaften, wie die Dichte und die Festigkeit der ausgehärteten Festkörper, verbessert oder zumindest nicht in negativer Weise beeinträchtigt. Ohne an eine Theorie gebunden zu sein, könnte die Verbesserung der Produkteigenschaften daher resultieren, dass der ausgehärtete Festkörper wegen des vergleichsweise geringen Wasseranteils eine höhere Dichte und Festigkeit aufweist. Demgegenüber könnte ein Festkörper nach dem Stand der Technik, der mit einem höheren Wasseranteil hergestellt wird, Hohlräume aufweisen, die bei der abschließenden Entfernung des Wassers durch Trocknen entstehen. Grundsätzlich war es überraschend, dass Kammpolymere, deren Verflüssigungswirkung für Gipszusammensetzungen nach dem Stand der Technik bekannt war, auch eine Verflüssigungswirkung bei Magnesiumzementen bewirken. Angesichts der unterschiedlichen chemischen Beschaffenheit von Magnesiumzementen konnte eine ähnliche Wirkung nicht erwartet werden. Darüber hinaus war nicht zu erwarten, dass die ausgehärteten Magnesiumzemente verbesserte Produkteigenschaften aufweisen.

### Ausführungsbeispiele

### Herstellung Magnesiumzementsuspensionen

Zur Herstellung der MgCl₂-Lösung wurde zunächst 1910 g Magnesiumchlorid Hexahydrat (MgCl₂ • 6 H₂O) in 1 Liter Wasser gelöst. Zu je 101 g dieser MgCl₂-Lösung wurden die in Tabelle 1 aufgeführte Menge Wasser sowie die in Tabelle 1 aufgeführte Menge Kammpolymer (Copolymer der Formel (I), ViscoCrete, erhältlich bei Sika Schweiz AG) unter Rühren zugegeben. In diese Lösung wurden 124 g MgO, 72 g MgCO₃, sowie 180 g Quarzsand unter Rühren mit einem geeigneten Rührwerkzeug (zum Beispiel 4-flügeliger Propeller, RZR 2051, Firma Heidolph) innerhalb von 15 Sekunden bei einer Drehzahl von 500 s-1 eingestreut. Nach einer Pause von 15 Sekunden zum Säubern der Wand des Mischgefäßes wurde für weitere 120 Sekunden bei einer Drehzahl 2000 s-1 gerührt.

Es wurden erfindungsgemäße Magnesiumzementsuspensionen ***Z1*** bis ***Z5*** mit unterschiedlichen Anteilen an einem Kammpolymer und unterschiedlichen Anteilen an Wasser untersucht. In dem Vergleichsversuch ***V*** wurde kein Kammpolymer zugesetzt. Die eingesetzten Mengen sind in Tabelle 1 gezeigt.

### Prüfung der Magnesiumzementsuspensionen

Zur Prüfung des Ausbreitmasses (ABM) wurde ein Kunststoffzylinder mit einem Innendurchmesser von 50 mm und einer Höhe von 50 mm auf eine leicht angefeuchtete Glasplatte mit einem Durchmesser von 300 mm gestellt. Die Magnesiumzementsuspension wurde sofort nach deren Herstellung bis zur oberen Kannte des Zylinders eingefüllt. Sofort nach dem Einfüllen wurde der Zylinder angehoben und 30 s gehalten damit möglichst die gesamte Suspension ausfließen konnte. Nachdem die Suspension zum Stillstand kam, spätestens jedoch nach weiteren 30 s wurde das Ausbreitmass in zwei senkrecht zueinander stehenden Richtungen mit einer Genauigkeit von ± 1 mm gemessen. Der auf mm gerundete Mittelwert beider Messungen wurde als Ergebnis angegeben.

### Die Ergebnisse sind in Tabelle 1 gezeigt.

**Tabelle 1: Magnesiumzementsuspensionen und Messergebnisse**

| **Beispiel*:*** | ***v*** | ***Z1*** | ***Z2*** | ***Z3*** | ***Z4*** | ***Z5*** |
|---|---|---|---|---|---|---|
| MgO[g] | 124 | 124 | 124 | 124 | 124 | 124 |
| MgCO₃[g] | 72 | 72 | 72 | 72 | 72 | 72 |
| MgCl₂-Lösung [g] | 101 | 101 | 101 | 101 | 101 | 101 |
| Wasser [g] | 120 | 104 | 88 | 71 | 55 | 39 |
| Quarzsand [g] | 180 | 180 | 180 | 180 | 180 | 180 |
| Kammpolymer [g] | - | 0.8 | 0.8 | 1 | 1.6 | 2.4 |
| Gesamtgewicht [g] | 597 | 581.8 | 565.8 | 549 | 533.6 | 518.4 |
| Gesamtwasser [g] | 189.7 | 173.7 | 157.7 | 140.7 | 124.7 | 108.7 |
| Anteil MgO/MgCO₃* | 33%/ 48% | 34%/ 48% | 35%/ 48% | 36%/ 48% | 37%/ 48% | 38%/ 48% |
| Anteil Quarzsand* | 30%/ 44% | 31%/ 44% | 32%/ 44% | 33%/ 44% | 34%/ 44% | 35%/ 44% |
| Anteil MgCl₂* | 5%/8% | 5%/8% | 5%/8% | 5%/8% | 5%/8% | 5%/8% |
| Anteil Kammpolymer* | -/- | 0.14%/ 0.20% | 0.14%/ 0.20% | 0.18%/ 0.25% | 0.3%/ 0.40% | 0.46%/ 0.60% |
| Anteil Gesamtwasser* | 32%/- | 30%/- | 28%/- | 26%/- | 24%/- | 21 %/- |
| Gesamtwasser in Bezug auf ***V*** (%) | 100% | 94% | 88% | 81% | 74% | 66% |
| ABM sofort [mm] | 142 | 193 | 163 | 142 | 134 | 110 |
| ABM 30 min[mm] | 133 | 188 | 158 | 139 | 107 | 102 |
| ABM 60 min[mm] | 117 | 118 | 76 | 98 | 100 | 94 |
| Erstarrungsbegin nach [min] | 25 | 75 | 87 | 44 | 34 | 16 |

*Anteile in Gew.-% beziehen sich auf das Gesamtgewicht der Magnesiumzementsuspension/ resp. auf das Gesamtgewicht des Magnesiumzements, ABM (Ausbreitmass) in mm.

Die Ausführungsbeispiele zeigen, dass durch die Verwendung des Kammpolymers einerseits die Gesamtwassermenge gegenüber der Vergleichszusammensetzung ***V*** reduziert werden kann, was eine Steigerung der Druckfestigkeit ermöglicht. Gleichzeitig wird, im Vergleich zur Vergleichszusammensetzung ***V***, das Ausbreitmass stark verbessert oder bleibt trotz massiver Verringerung des Gesamtwassergehalts mit der Vergleichszusammensetzung vergleichbar.

## Patentansprüche

1. Magnesiumzement, enthaltend
(a) Magnesiumverbindung **MV**, ausgewählt aus der Gruppe bestehend aus Magnesiumoxid, Magnesiumcarbonat und Magnesiumhydroxid;
(b) mindestens ein Magnesiumsalz, ausgewählt aus der Gruppe bestehend aus Magnesiumsulfat, -chlorid, -nitrat, -jodid und -bromid;
(c) mindestens ein Kammpolymer, das ein lineares Polymergerüst und daran gebundene Seitenketten aufweist, wobei das lineare Polymergerüst Carbonsäuregruppen und/oder Carboxylatgruppen aufweist; und
(d) Quarzsand.

2. Magnesiumzement gemäß Anspruch 1, wobei der Anteil an der Magnesiumverbindung **MV** 30-65 Gew.-%, insbesondere 40-60 Gew.-%, bezogen auf das Gesamtgewicht des Magnesiumzement, beträgt.

3. Magnesiumzement gemäß mindestens einem der vorhergehenden Ansprüche, wobei das Verhältnis der Gewichtsanteile am Gesamtgewicht des Magnesiumzement von Magnesiumsalz : Magnesiumverbindung **MV** 0.1:1 - 0.35:1, insbesondere 0.125:1 - 0.185:1, beträgt.

4. Magnesiumzement gemäß mindestens einem der vorhergehenden Ansprüche, wobei der Anteil an dem Magnesiumsalz 2-20 Gew.-%, insbesondere 5-12 Gew.-%, bezogen auf das Gesamtgewicht des Magnesiumzement, beträgt.

5. Magnesiumzement gemäß mindestens einem der vorhergehenden Ansprüche, wobei es sich bei dem Magnesiumsalz um Magnesiumchlorid handelt.

6. Magnesiumzement gemäß mindestens einem der vorhergehenden Ansprüche, wobei das lineare Polymergerüst mindestens 20% Carboxylatgruppen aufweist, bezogen auf die Gesamtzahl der monomeren Untereinheiten des linearen Polymergerüsts.

7. Magnesiumzement gemäß mindestens einem der vorhergehenden Ansprüche, wobei das Kammpolymer ein Copolymer von Vinylether oder Allylether mit Maleinsäureanhydrid, Maleinsäure, (Meth)acrylsäure oder (Meth)acrylamid ist.

8. Magnesiumzement gemäß mindestens einem der vorhergehenden Ansprüche, wobei das Kammpolymer ein Copolymer der Formel (I) ist 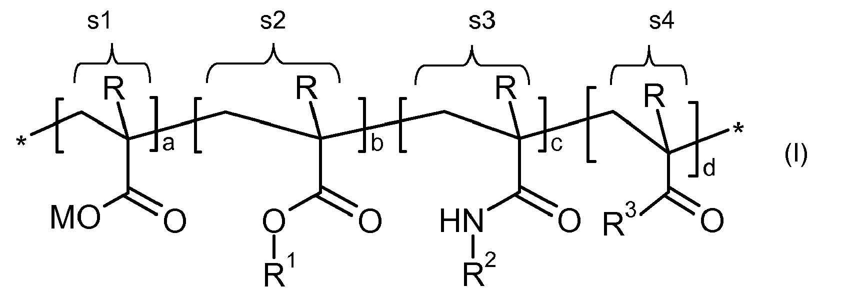 wobei
M unabhängig voneinander ausgewählt ist aus H⁺, Alkalimetallion, Erdalkalimetallion, zwei- oder dreiwertiges Metallion, Ammoniumion oder organische Ammoniumgruppe;
R unabhängig voneinander für Wasserstoff oder für eine Methylgruppe steht;
R¹ unabhängig voneinander für -[AO]_{q}-R⁴ steht;
R² unabhängig voneinander für eine C₁-bis C₂₀-Alkylgruppe,
-Cycloalkylgruppe, -Alkylarylgruppe oder für -[AO]_{q}-R⁴ steht, wobei
A unabhängig voneinander für eine C₂- bis C₄-Alkylengruppe;
R⁴ für eine C₁-bis C₂₀-Alkylgruppe, -Cyclohexylgruppe oder
-Alkylarylgruppe steht, und
q einen Wert von 2 bis 250, insbesondere von 8 bis 200, besonders bevorzugt von 11 bis 150, darstellt;
R³ unabhängig voneinander für -NR⁵R⁶ oder -OR⁷NR⁸R⁹ steht,
wobei R⁵ und R⁶ unabhängig voneinander für H oder eine C₁-bis C₂₀-Alkylgruppe, -Cycloalkylgruppe oder -Alkylarylgruppe oder -Arylgruppe oder für eine Hydroxyalkylgruppe oder für eine Acetoxyethyl- (CH₃-CO-O-CH₂-CH₂-), eine Hydroxyisopropyl- (HO-CH(CH₃)-CH₂-) oder eine Acetoxyisopropylgruppe CH₃-CO-O-CH(CH₃)-CH₂-) steht,
oder wobei R⁵ und R⁶ zusammen einen Ring bilden, von dem der Stickstoff ein Teil ist, um einen Morpholin- oder Imidazolinring aufzubauen,
R⁷ für einen unsubstituierten oder substituierten Alkylrest mit 1 bis 10 C-Atomen steht,
R⁸ und R⁹ je unabhängig für eine C₁ bis C₂₀-Alkylgruppe, - Cycloalkylgruppe, -Alkylarygruppe, -Arylgruppe oder für eine Hydroxyalkylgruppe stehen,
wobei die Abfolge der Teilstrukturelemente s1, s2, s3 und s4 alternierend, blockartig oder zufällig angeordnet ist,
wobei a, b, c und d Molverhältnisse der Struktureinheiten s1, s2, s3 und s4 darstellen, mit dem Verhältnis a/b/c/d =
(0.1 - 0.9) / (0.1 - 0.9) / (0 - 0.8) / (0 - 0.3),
insbesondere (0.1 - 0.9) / (0.1 - 0.9) / (0 - 0.5) / (0 - 0.1),
bevorzugt (0.1 - 0.9) / (0.1 - 0.9) / (0 - 0.3) / (0 - 0.06),
mit der Massgabe, dass a + b + c + d = 1 ist und die Summe c + d bevorzugt grösser als 0 ist.

9. Magnesiumzement gemäß mindestens einem der vorhergehenden Ansprüche, wobei der Anteil an dem mindestens einen Kammpolymer 0.05 - 5 Gew.-%, insbesondere 0.1 - 1 Gew.-%, bezogen auf das Gesamtgewicht des Magnesiumzement, beträgt.

10. Magnesiumzement gemäß mindestens einem der vorhergehenden Ansprüche, wobei der Anteil an Quarzsand 40-60 Gew.-%, bezogen auf das Gesamtgewicht des Magnesiumzement, beträgt.

11. Bindemittelsuspension, enthaltend
60 - 85 Gew.-% eines Magnesiumzements gemäss einem der Ansprüche 1 -10
15-40 Gew.-% Wasser,
bezogen auf das Gesamtgewicht der Bindemittelsuspension.

12. Verfahren zur Herstellung eines Formkörpers, umfassend die Schritte
(A) Vermischen eines Magnesiumzements gemäss einem der Ansprüche 1 -10 mit Wasser,
(B) Formen zu einem Formköper und
(C) Aushärten des Formkörpers.

13. Formkörper, erhältlich durch Aushärten eines Magnesiumzements gemäß mindestens einem der Ansprüche 1-10 oder durch ein Verfahren gemäß Anspruch 12.

14. Formkörper nach Anspruch 13 in Form eines Bodenbelags, insbesondere eines Estrichs.

15. Verwendung eines Kammpolymers, das ein lineares Polymergerüst und daran gebundene Seitenketten aufweist, wobei das lineare Polymergerüst Carbonsäuregruppen und/oder Carboxylatgruppen aufweist, zur Verbesserung der Verarbeitbarkeit oder der Stabilität von Magnesiumzementen.
